# EUROPÄISCHE PATENTANMELDUNG

(11) **EP 1 992 467 A1**
(43) Veröffentlichungstag der Anmeldung: **19.11.2008**
(21) Anmeldenummer: 08005073.5
(22) Anmeldetag: 19.03.2008
(51) Int. Cl.: B29C 33/00

(54) **Vorrichtung und Verfahren zur Herstellung eines faserverstärkten Kunststoffbauteils**

(30) Priorität: 18.05.2007 DE 102007023229
(71) Anmelder: Bayerische MotorenWerke Aktiengesellschaft, 80809 München (DE)
(72) Erfinder: Mai, Horst, 84095 Furth (DE)

(57) **Zusammenfassung**

Ein Werkzeug für die Herstellung eines faserverstärkten Kunststoffbauteils, weist mindestens zwei Werkzeugteile (2,3) auf, die eine Kavität ausbilden, in die Fasern (1) sowie ein Kunststoff (5) zur Ausbildung des Kunststoffbauteils eingebracht werden können, wobei zumindest ein Werkzeugteil im Bereich der Kavität zumindest teilweise nachgiebig ausgebildet ist.

## Beschreibung

Die Erfindung betrifft ein Verfahren zur Herstellung eines faserverstärkten Kunststoffbauteils sowie ein hierbei zur Anwendung kommendes Werkzeug.

Faserverstärkte Kunststoffbauteile werden beispielsweise mittels des RTM-(Resin-Transfer-Moulding)-Verfahrens hergestellt. Hierbei werden Fasern in die Kavität eines zweiteiligen Formwerkzeugs (Matrize und Patrize) eingebracht und nach dem Schließen des Formwerkzeugs eine Kunststoffformmasse, in der Regel basierend auf einem Harzsystem, in die Kavität injiziert, wobei diese die Fasern als Matrixwerkstoff umschließt und abschließend zu dem Kunststoffbauteil aushärtet.

Die aus dem Stand der Technik bekannten Formwerkzeuge, die bei solchen Verfahren zur Herstellung von faserverstärkten Kunststoffbauteilen zur Anwendung kommen, werden stets auf das gleiche Maß (Tuschierfläche) für ein herzustellendes Bauteil geschlossen. Da diese zudem aufgrund der während des Prozesses auftretenden sehr hohen Drücke extrem steif ausgeführt sein müssen, ist das Volumen der Kavität bei jedem Herstellvorgang identisch. Hiermit sind wesentliche Nachteile verbunden.

Bei der Herstellung von faserverstärkten Kunststoffbauteilen im RTM-Verfahren kommen regelmäßig Fasern zum Einsatz, die in Form von Geweben in die Kavität des Formwerkzeugs eingelegt werden. Diese weisen jedoch vielfach eine Mehrzahl von Fehlstellen auf, wie beispielsweise fehlende Faserrovings oder Irregularitäten in der Anordnung der einzelnen Rovings. Bei großflächigen Bauteilen werden die Faserngewebe zudem häufig in Form von kleineren Abschnitten in der Kavität nebeneinander gelegt, so dass Überlappungen entstehen, die eine lokal größere Dicke der Faserschicht mit sich bringen. Diese Irregularitäten in der Faseranordnung können aufgrund der fehlenden Nachgiebigkeit des Formwerkzeugs zu sichtbaren Fehlstellen an der Oberfläche des Kunststoffbauteils führen, die aus Qualitätsgründen vermieden werden sollen.

Ausgehend von diesem Stand der Technik liegt der Erfindung die Aufgabe zugrunde, ein Werkzeug sowie ein Verfahren anzugeben, das die Herstellung qualitativ hochwertiger faserverstärkter Kunststoffbauteile ermöglicht.

Diese Aufgabe wird durch die Gegenstände der unabhängigen Patentansprüche gelöst; vorteilhafte Weiterbildungen sind Gegenstand der jeweiligen abhängigen Patentansprüche.

Der Kern der Erfindung sieht vor, bei einem Werkzeug, das zur Herstellung eines faserverstärkten Kunststoffbauteils verwendet wird und ein Werkzeugunter- und -oberteil (Matrize und Patrize) aufweist, die eine Kavität ausbilden, in die Fasern sowie eine Kunststoffmasse zur Ausbildung des Kunststoffbauteils eingebracht werden können, zumindest eines der Werkzeugteile im Bereich der Kavität zumindest teilweise nachgiebig auszubilden.

Durch die nachgiebige Ausbildung der Patrize kann sich diese an den Stellen, wo Irregularitäten in der Faseranordnung vorliegen, mehr oder weniger verformen und somit für einen Fehlstellenausgleich sorgen. Auf diese Weise können faserverstärkte Kunststoffbauteile hergestellt werden, die zwar auf einer Seite - der dem nachgiebig ausgebildeten Werkzeugteil zugewandten Seite - sichtbare Fehlstellen aufweisen, dafür jedoch auf der dem anderen Werkzeugteil zugewandten Seite optisch (im wesentlichen) fehlstellenfrei und somit hochwertig sind. Der Erfindungsgegenstand kann somit besonders bevorzugt bei der Herstellung von faserverstärkten Kunststoffbauteilen zur Anwendung kommen, die nur eine Sichtseite aufweisen. Folglich ist es auf einfache Weise und ohne großen Aufwand möglich, Bauteile herzustellen, die hohen Qualitätsanforderungen entsprechen.

Erfindungsgemäß können die beiden Werkzeugteile ein oder mehrteilig ausgeführt sein, sofern zwei Einheiten vorgesehen sind, die durch ein relatives Verfahren zueinander das Einlegen der Fasern vor dem Injizieren des Matrixwerkstoffs und nach dessen Aushärten das Entnehmen der Kunststoffbauteils ermöglichen. Grundsätzlich können auch mehr als zwei Werkzeugteile eingesetzt werden, die relativ zueinander verfahrbar sind, ohne das von dem Erfindungsgedanken der nachgiebigen Ausgestaltung eines oder mehrerer der Werkzeugteile abgewichen wird.

In einer vorteilhaften Ausführungsform der vorliegenden Erfindung weist das nachgiebige Werkezeugteil eine flexible Gegenlage auf. Hierbei kann es sich um eine Schicht aus einem (hoch-)elastischen Werkstoff (z.B. Elastomer) handeln, die sich an einem ansonsten steifen Werkzeugteilkörper (dass heißt, der Werkzeugteilkörper erfährt bei den gegebenen Kräfteverhältnissen keine technisch relevante Verformung) abstützt. Die Nachgiebigkeit der Patrize wird somit durch eine Verformung der elastischen Schicht erreicht.

In einer alternativen Ausführungsform kann zwischen dem steifen Patrizenkörper sowie der elastischen Schicht ein Hohlraum vorgesehen sein, in den ein Fluid unter Druck eingebracht wird. Durch eine Beeinflussung des Fluiddrucks kann die Nachgiebigkeit der flexiblen Gegenlage der Patrize beeinflusst werden.

In einer besonders bevorzugten Ausführungsform ist das Volumen zwischen dem steifen Patrizenkörper und der flexiblen Gegenlage mit einer (grobporigen) Schaumstoff- und einer Flüssigkeitsfüllung versehen. Während die Schaumstofffüllung der Stabilität der elastischen Schicht dienen kann, kann die die Poren des Schaumstoffs durchsetzende Flüssigkeitsfüllung für eine Einstellung der Nachgiebigkeit (Gegendruck) eingesetzt werden.

In einer alternativen Ausführungsform ist der nachgiebige Werkzeugteil zumindest zweiteilig ausgeführt, wobei die Nachgiebigkeit des Werkzeugteils durch eine schwimmende Lagerung des einen Werkzeugteilelements in dem zweiten Werkzeugteilelement erzielt wird. Hierbei können ferner Mittel zur Erzeugung eines Gegendrucks vorgesehen sein, die beliebig ausgeführt sein können. Insbesondere eignen sich hierzu beliebige Arten von Federn.

In einer besonders bevorzugten Ausführungsform sind die Mittel zur Erzeugung des Gegendrucks einstellbar ausgeführt.

Eine erfindungsgemäße Vorrichtung zur Herstellung eines faserverstärkten Kunststoffbauteils weist neben einem erfindungsgemäßen Werkzeug zumindest eine Injektionsvorrichtung zum Einbringen der Kunststoffmasse in die Kavität auf.

Die Erfindung wird nachfolgend anhand von in den Zeichnungen dargestellten Ausführungsbeispielen näher erläutert.

In den Zeichnungen zeigen die
- Figuren 1a bis c:: den grundsätzlichen Verfahrensablauf beim Herstellen von faserverstärkten Kunststoffbauteilen mittels des RTM-Verfahrens,
- Figur 2:: in einer schematischen Darstellung ein erfindungsgemäßes Werkzeug in einer ersten Ausführungsform,
- Figur 3:: in einer schematischen Darstellung ein erfindungsgemäßes Werkzeug gemäß einer zweiten Ausführungsform,
- Figur 4:: in einer schematischen Darstellung ein erfindungsgemäßes Werkzug in einer dritten Ausführungsform,
- Figur 5:: die Herstellung eines faserverstärkten Kunststoffbauteils in einem Werkzeug gemäß einer vierten Ausführungsform und
- Figur 6:: einen Ausschnitt aus einem erfindungsgemäßen Werkzeug gemäß einer fünften Ausführungsform.

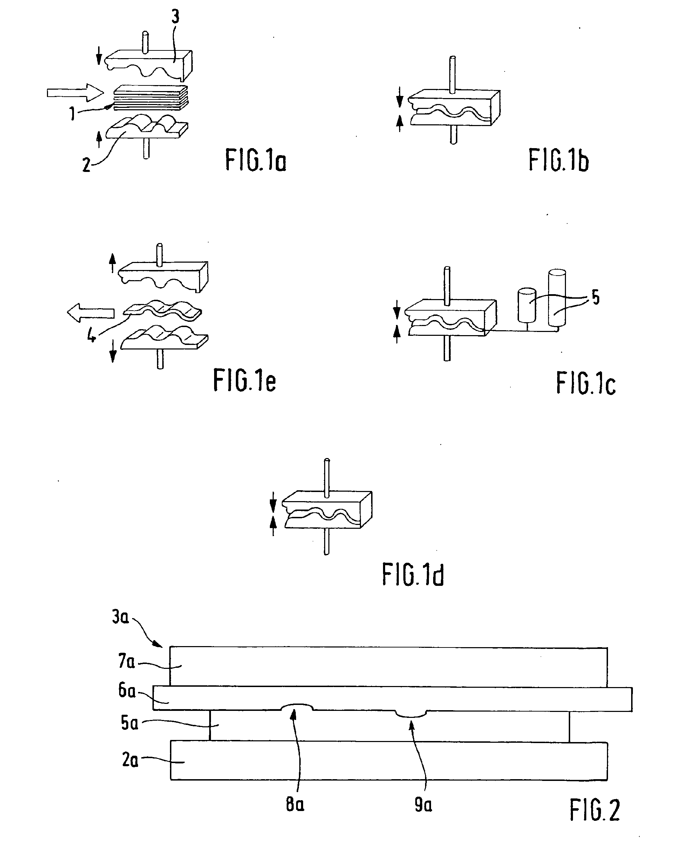

Die Figuren 1a-e beschreiben in fünf Einzelschritten den grundsätzlichen Ablauf zur Herstellung eines Kohlefaser-verstärkten Kunststoffbauteils mittels des RTM- (Resin-Transfer-Moulding)-Verfahrens.

Hierbei werden mehrere übereinander liegende Kohlenstoff-Fasermatten 1 in das geöffnete Werkzeug einer RTM-Hochdruck-Injektionsvorrichtung eingebracht (Figur 1a). Das Werkzeug, bestehend aus einem Werkzeugunterteil (Matrize 2) und einem Werkzeugoberteil (Patrize 3), wird daraufhin zusammengefahren, wobei die Fasermatten 1 bereits verformt werden, so dass sie - zumindest annähernd - ihre abschließende, dreidimensionale Form erhalten (Figur 1b). Daraufhin wird ein zweikomponentiges Harzsystem 5, bestehend aus einem Epoxidharz und einem Härter, unter hohem Druck in die von den Werkzeugteilen gebildete Kavität injiziert, das die Fasermatten durchsetzt (Figur 1c). Das Aushärten der Matrix (des Harzsystems 5) erfolgt unter Zufuhr von Wärme durch ein Aufheizen des Werkzeugs, so dass das fertige Kunststoffbauteil 4 nach dem Öffnen des Werkzeugs entnommen werden kann. Bei entsprechenden Qualitätsanforderungen an das Kunststoffbauteil kann ein Nachbearbeiten erforderlich sein.

Figur 2 verdeutlicht den grundsätzlichen Effekt, den ein erfindungsgemäßes Werkzeug bei der Herstellung des faserverstärkten Kunststoffbauteils hervorruft. Wie bereits in den Figuren 1a-e dargestellt ist, wird das Kunststoffbauteil 5a zwischen einer Matrize 2a sowie einer Patrize 3a verpresst. Erfindungsgemäß weist die Patrize 3a eine flexible Gegenlage 6a auf, die zwischen einem starren Patrizenkörper 7a sowie dem Kunststoffbauteil 5a angeordnet ist. Exemplarisch sind zwei mögliche Fehlstellen innerhalb des faserverstärkten Kunststoffbauteils 5a dargestellt. Die erste Fehlstelle stellt eine "Faserdopplung" 8a dar, bei der lokal unverhältnismäßig viele Fasern übereinander liegen, so dass der Faservorformling an dieser Stelle dicker als der übrige Bereich des Faservorformlings ist. Die zweite Fehlstelle stellt einen "Fasergap" 9a dar, bei dem die Dicke des Faservorformlings aufgrund einer Lücke in einer oder mehreren der übereinander liegenden Fasermatten dünner ist. Bei herkömmlichen Werkzeugen, wie sie aus dem Stand der Technik bekannt sind, die keine erfindungsgemäße nachgiebige Patrize aufweisen, können solche Fehlstellen aufgrund der steifen Ausbildung sowohl der Matrize als auch der Patrize auf beiden Seiten des Kunststoffbauteils optisch hervortreten, wodurch die Qualität des Bauteils reduziert wird. Das erfindungsgemäße Werkzeug verhindert nun ein Sichtbarwerden der Fehlstellen auf der der Matrize 2a zugewandten Seite, die als spätere Sichtseite des Kunststoffbauteils vorgesehen ist, indem die flexible Gegenlage 6a als nachgiebiges Element des Werkzeugs für einen Fehlstellenausgleich sorgt. Durch das erfindungsgemäße Werkzeug wird somit die optische Sichtbarkeit der Fehlstellen (nahezu) vollständig auf die Patrizenseite verschoben, was jedoch für die optische Qualität des Bauteils unerheblich ist, da diese als nicht sichtbare Seite des Kunststoffbauteils vorgesehen ist.

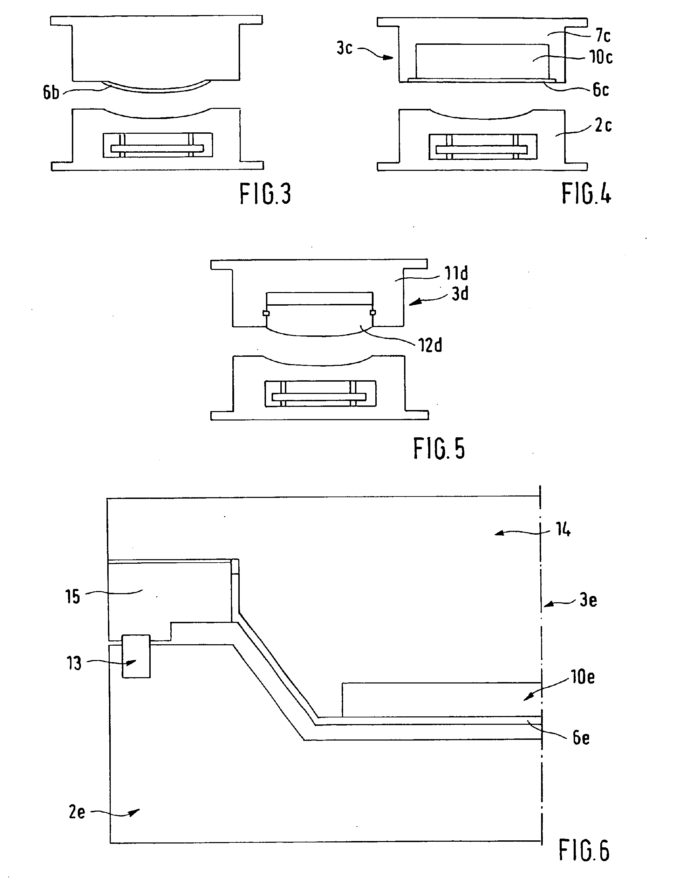

Die Figuren 3 bis 5 zeigen in schematischen Darstellungen drei verschiedene Ausführungsformen von erfindungsgemäßen Werkzeugen, bei denen die Patrize nachgiebig ausgebildet ist.

Bei der Ausführungsform gemäß Figur 3 kommt - wie bereits bei der Ausführungsform in Figur 2 - eine nachgiebige Gegenlage 6b aus einem elastischen Material zum Einsatz. Die nachgiebige Gegenlage 6b besteht aus einer EPDM-Mischung und weist eine Dicke von ca. 2 - 4 mm auf. Durch die Elastizität des Werkstoffs der Gegenlage 6b passt sich diese während des Prozesses an die in dem Faservorformling bzw. dem Kunststoffbauteil vorhandenen Unebenheiten an.

Die Ausführungsform eines erfindungsgemäßen Werkzeugs gemäß der Figur 4 unterscheidet sich von derjenigen der Figur 3 insbesondere darin, dass die flexible Gegenlage 6c nicht (ausschließlich) an dem steifen Patrizenkörper 7c anliegt, sondern ein Hohlvolumen 10c überspannt, das mit einem flüssigen Medium gefüllt ist. Über eine nicht dargestellte Druckregelvorrichtung kann der Druck des Mediums in dem Hohlvolumen 10c geregelt und somit an die Anforderungen der unterschiedlichen Fertigungsprozesse angepasst werden. Weiterhin kann die in der Figur 4 dargestellte Ausführungsform einer nachgiebigen Patrize 3c (in Grenzen) zur Herstellung von Bauteilen unterschiedlicher Geometrie verwendet werden, da sich die flexible Gegenlage 6c der Patrize 3c durch eine entsprechende Füllung des Hohlvolumens 10c mit dem flüssigen Medium an die jeweilige, die Bauteilgeometrie bestimmende Form der Matrize 2c anpassen kann.

Bei der Ausführungsform gemäß Figur 5 ist die Patrize 3d zweiteilig ausgeführt. In einem steifen Patrizenrahmen 11d ist ein ebenfalls in sich steifer Patrizenstempel 12d schwimmend gelagert. Die erfindungsgemäße Nachgiebigkeit der Patrize 3d wird durch eine Relativbewegung zwischen dem Patrizenstempel 12d und dem Patrizenrahmen 11d erreicht. Der erforderliche Gegendruck des Patrizenstempels 12d kann beispielsweise durch beliebige Arten von Federn (nicht dargestellt) erreicht werden, die zwischen dem Patrizenrahmen 11d und dem Patrizenstempel 12d angeordnet sind. Grundsätzlich kann der erforderliche Gegendruck jedoch auch ausschließlich durch die Gewichtskraft des Patrizenstempels 12d selbst erzeugt werden.

Figur 6 stellt in einer detaillierten Ansicht einen Ausschnitt aus einem erfindungsgemäßen Werkzeug gemäß einer fünften Ausführungsform dar. Das Werkzeug weist eine Matrize 2e sowie eine Patrize 3e auf, die in der Darstellung in geschlossener Stellung positioniert sind. Zwischen Matrize 2e und Patrize 3e ist eine Kavität ausgebildet, in die Fasern eingebracht werden sowie der Matrixwerkstoff injiziert wird. Ein Austreten von Matrixwerkstoff über die Kontaktfläche zwischen der Matrize und der Patrize wird über eine umlaufende Hauptdichtung 13 verhindert. Die Patrize weist eine flexible Gegenlage 6e aus einem elastischen Werkstoff auf, die sich über einen Abschnitt der von der Matrize 2e und Patrize 3e gebildeten Kavität erstreckt. Zur Fixierung der flexiblen Gegenlage 6e wird diese in einem senkrecht angeordneten Spalt zwischen dem Patrizenhauptkörper 14 und einem hierzu beweglichen Werkzeugeinsatz 15 gequetscht. Die flexible Gegenlage 6e überspannt ein Hohlvolumen 10e in dem Patrizenhauptkörper 14, das mit einem grobporigen Schaumstoff aufgefüllt ist. Der Schaumstoff dient der Formstabilität der flexiblen Gegenlage 6e. Um den Gegendruck der flexiblen Gegenlage 6e auf das Kunststoffbauteil beeinflussen zu können, ist das Hohlvolumen 10e des Patrizenhauptkörpers 14 (bzw. die grobporige Schaumstofffüllung) zudem mit einer Flüssigkeit gefüllt, deren Druck über eine nicht dargestellte Regelvorrichtung beeinflusst werden kann.

## Patentansprüche

1. Werkzeug für die Herstellung eines faserverstärkten Kunststoffbauteils, mit mindestens zwei Werkzeugteilen (2a-e, 3a-e), die eine Kavität ausbilden, in die Fasern (1) sowie ein Kunststoff (5) zur Ausbildung des Kunststoffbauteils eingebracht werden können, **dadurch gekennzeichnet, dass** zumindest ein Werkzeugteil (3a-e) im Bereich der Kavität zumindest teilweise nachgiebig ausgebildet ist.

2. Werkzeug gemäß Anspruch 1, **dadurch gekennzeichnet, dass** das nachgiebige Werkzeugteil (3a-e) eine flexible Gegenlage (6a-e) ausweist.

3. Werkzeug gemäß Anspruch 2, **dadurch gekennzeichnet, dass** die flexible Gegenlage (6a-e) mittels eines Fluids druckbeaufschlagt ist.

4. Werkzeug gemäß Anspruch 3, **dadurch gekennzeichnet, dass** zwischen dem nachgiebigen Werkzeugteil (3a-e) und der flexiblen Gegenlage (6a-e) ein Hohlvolumen (10c,e) mit einer Schaumstoff- und einer Flüssigkeitsfüllung vorgesehen ist.

5. Werkzeug gemäß Anspruch 3 oder 4, **gekennzeichnet durch** Mittel zur Beeinflussung der Höhe der Druckbeaufschlagung.

6. Werkzeug gemäß Anspruch 1, **dadurch gekennzeichnet, dass** in dem nachgiebigen Werkzeugteil (3a-e) ein Abschnitt (12d) schwimmend gelagert ist.

7. Werkzeug gemäß Anspruch 6, **gekennzeichnet durch** Mittel zur Erzeugung eines Gegendrucks.

8. Werkzeug gemäß Anspruch 7, **dadurch gekennzeichnet, dass** die Mittel zur Erzeugung eines Gegendrucks einstellbar sind.

9. Vorrichtung zur Herstellung eines faserverstärkten Kunststoffbauteils mit einem Werkzeug gemäß einem der vorhergehenden Ansprüche und einer Injektionsvorrichtung zum Einbringen des Kunststoffs (5) in die Kavität.

10. Verfahren zur Herstellung eines faserverstärkten Kunststoffbauteils, wobei Fasern (1) in die Kavität eines Werkzeug gemäß einem der Ansprüche 5 oder 8 eingelegt wird und nachträglich ein Kunststoff (5) in die Kavität eingebracht wird, **dadurch gekennzeichnet, dass** die Höhe des Gegendrucks aktiv gesteuert wird.
